# EUROPEAN PATENT APPLICATION

(11) **EP 4 498 725 A1**
(43) Date of publication of application: **29.01.2025**
(21) Application number: 24190148.7
(22) Date of filing: 22.07.2024
(51) Int. Cl.: H04W 24/10, G06N 3/045, H04W 36/00

(54) **TERMINAL AND SERVING CELL PERFORMING HANDOVER AND OPERATING METHODS THEREOF**

(30) Priority: 25.07.2023 KR 20230097058; 18.12.2023 KR 20230185088
(71) Applicant: Samsung Electronics Co., Ltd., Suwon-si, Gyeonggi-do 16677 (KR)
(72) Inventor: HAN, Sangwook, 16677 Suwon-si (KR); CHOI, Yoojin, 16677 Suwon-si (KR); LEE, Junho, 16677 Suwon-si (KR)
(74) Representative: Marks & Clerk LLP

(57) **Abstract**

A terminal receives a measurement configuration from a serving cell, measures at least one received signal based on the measurement configuration, and confirming whether an event corresponding to the measurement configuration has occurred. Based on the confirming that the event has occurred, the terminal generates a latent vector by encoding a measurement result set including a plurality of measurement results, and in response to the occurrence of the event, transmits, to the serving cell, a measurement report generated based on the latent vector.

## Description

### BACKGROUND

Embodiments are related to a terminal and a serving cell that perform handover and operating methods thereof.

A communication system may support handover between cells without disconnecting data flow in a connected state to ensure mobility of a terminal. During reception of a service, the terminal may periodically measure a signal received from a currently connected serving cell (or a source cell) and may report a measurement result to the serving cell when a handover-related event designated by the serving cell occurs.

However, when the terminal transmits a measurement report for handover to the serving cell, the amount of data of the measurement result included in the measurement report may increase signaling overhead between the terminal and the serving cell. In addition, a handover-related event occurring in a specific communication environment may have low reliability so that unnecessary handover is performed, resulting in a waste of wireless resources.

### SUMMARY

Embodiments provide a terminal and a serving cell that perform a handover procedure in which resources for measurement reporting for handover are efficiently used so that unnecessary handover is reduced, and operating methods of the terminal and the serving cell.

Provided is an operating method of a terminal, the operating method including receiving a measurement configuration from a serving cell, measuring at least one received signal based on the measurement configuration, confirming whether an event corresponding to the measurement configuration has occurred, based on confirming that the event has occurred, generating a latent vector by encoding a measurement result set including a plurality of measurement results, and in response to an occurrence of the event, transmitting, to the serving cell, a measurement report generated based on the latent vector.

Also provided is an operating method of a serving cell, the operating method including transmitting a measurement configuration to a terminal, receiving, from the terminal, a measurement report corresponding to the measurement configuration and based on an autoencoder, obtaining a measurement result set including a plurality of measurement results by decoding a latent vector included in the measurement report, and controlling a next handover step based on the measurement result set.

Also provided is a terminal including a memory configured to store a neural network model trained based on an autoencoder, and a processor configured to generate, by using the neural network model, a latent vector from a measurement result set including a plurality of measurement results for handover and determine, based on the latent vector, whether to transmit a measurement report to a serving cell.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a diagram illustrating a communication system according to an embodiment;
FIG. 2A is a block diagram schematically illustrating a terminal according to an embodiment, and FIG. 2B is a diagram illustrating an autoencoder serving as a basis component according to embodiments;
FIG. 3 is a flowchart illustrating a handover procedure in a communication system according to an embodiment;
FIG. 4A is a diagram schematically illustrating an implementation of a terminal and a serving cell according to an embodiment, and FIG. 4B is a diagram schematically illustrating an implementation of a terminal according to an embodiment;
FIG. 5A is a flowchart illustrating a handover procedure in a communication system according to an embodiment, and FIG. 5B is a flowchart illustrating a detailed embodiment of operation S141 of FIG. 5A;
FIG. 6 is a diagram schematically illustrating an implementation of a terminal according to an embodiment;
FIG. 7 is a flowchart illustrating a handover procedure in a communication system according to an embodiment;
FIG. 8 is a diagram schematically illustrating an implementation of a terminal and a serving cell according to an embodiment;
FIG. 9A is a flowchart illustrating a handover procedure in a communication system according to an embodiment, and FIG. 9B is a flowchart illustrating a detailed embodiment of operation S260 of FIG. 9A;
FIG. 10 is a flowchart illustrating an operating method of a terminal according to an embodiment;
FIG. 11 is a flowchart illustrating a handover procedure in a communication system according to an embodiment;
FIG. 12 is a flowchart illustrating a handover operation in a communication system according to an embodiment;
FIGS. 13A and 13B are flowcharts illustrating a method of generating a neural network model based on an autoencoder in a communication system, according to an embodiment;
FIG. 14 is a block diagram illustrating an electronic device according to an embodiment; and
FIG. 15 is a diagram illustrating communication devices for performing a handover operation, according to an embodiment.

### DETAILED DESCRIPTION OF THE EMBODIMENTS

Hereinafter, embodiments will be described with reference to the accompanying drawings.

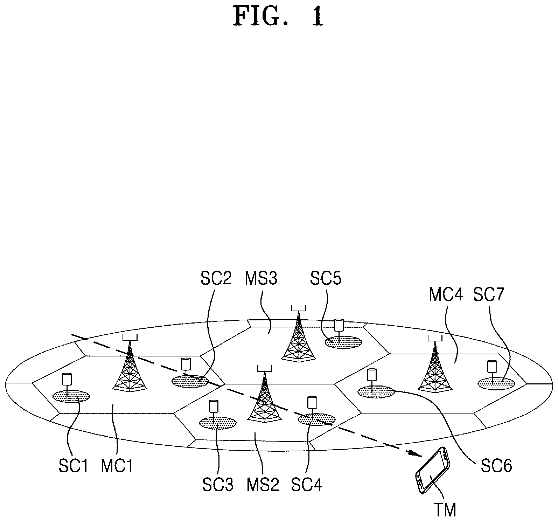

FIG. 1 is a diagram illustrating a communication system 1 according to an embodiment. Embodiments may be applied to both a homogeneous network including the same types of cells and a heterogeneous network including different types of cells. The communication system 1 may be, as a non-limiting example, a fifth generation (5G) system, a long-term evolution (LTE) system, a code division multiple access (CDMA) system, a global system for mobile communications (GSM) system, a wireless local area network (WLAN) system, or any other wireless communication system. Hereinafter, it is assumed that the communication system 1 is a 5G system, an LTE system, or a system capable of supporting 5G- and LTE-based communication. However, it will be understood that the embodiments are not limited thereto and may also be applied to newly proposed next-generation communication technologies.

Referring to FIG. 1, the communication system 1 may include a plurality of macro cells MC1 to MC4, a plurality of small cells SC1 to SC7, and a terminal TM. The terminal TM may be a wireless communication device, may be mobile, and may transmit and receive data and/or control information by communicating with the macro cells MC1 to MC4 and the small cells SC1 to SC7. The terminal TM may be referred to as, for example, a user equipment (UE), a mobile station (MS), a mobile terminal (MT), a user terminal, a subscriber station (SS), a wireless device, a handheld device, a communication device, a device, etc.

Each of the macro cells MC1 to MC4 and the small cells SC1 to SC7 may generally refer to a fixed station that communicates with the terminal TM and/or another cell and may exchange data and control information by communicating with the terminal TM and/or another cell. The macro cells MC1 to MC4 may correspond to a larger coverage area than the small cells SC1 to SC7. A coverage area refers to a range in which a certain cell is capable of providing a network to a user (or a terminal).

Each of the macro cells MC1 to MC4 and the small cells SC1 to SC7 may be referred to as, for example, a base station, a Node B, an evolved Node B (eNB), a sector, a site, a base transceiver system (BTS), an access point (AP), a relay node, a remote radio head (RRH), a radio unit (RU), etc. Although FIG. 1 illustrates that the communication system 1 includes only the macro cells MC1 to MC4 and the small cells SC1 to SC7 corresponding to different coverage areas, this is merely an example, and thus, embodiments are not limited thereto. The communication system 1 may further include mega cells, micro cells, pico cells, femto cells, etc. respectively corresponding to coverage areas of various sizes.

Due to the mobility of the terminal TM, handover may occur from a macro cell to a macro cell, from a macro cell to a small cell, from a small cell to a macro cell, or from a small cell to a small cell. For handover, a handover procedure specified in the 3GPP standard, etc. may be performed between a terminal, a serving cell, and a target cell.

The terminal TM may receive a radio resource control (RRC) reconfiguration message including a measurement configuration from a serving cell currently RRC-connected to provide a network service. The measurement configuration may be a prior arrangement for the terminal TM to perform operations of measuring a signal received from the serving cell and transmitting a measurement report to the serving cell and may include information on a measurement object to be measured by the terminal TM and a report configuration. For example, the measurement object information may include a frequency band, candidate target cell information, a black list, etc., and the report configuration may include information indicating a specific event (or condition) for which the terminal TM is to transmit a measurement report.

A plurality of events for triggering a measurement report may exist in the handover procedure. For example, the plurality of events may include `A1' to 'A6' events, 'B1' and 'B2' events, an 'I1' event, and `C1' and 'C2' events. Herein, an event may also be referred to as a handover-related event. To briefly describe each event, the `A1' event occurs when a signal measurement value of the serving cell becomes better than a threshold, the `A2' event occurs when a signal measurement value of the serving cell becomes worse than a threshold, the 'A3' event occurs when a signal measurement value of a neighboring cell becomes better than a signal measurement value of a special cell (or SpCell) by an offset, the `A4' event occurs when a signal measurement value of the neighboring cell becomes better than a threshold, the 'A5' event occurs when a signal measurement value of the special cell becomes worse than a first threshold and a signal measurement value of the neighboring cell becomes better than a second threshold, and the 'A6' event occurs when a signal measurement value of the neighboring cell becomes better than a signal measurement value of a secondary cell (or SCell) by an offset. The 'B1' event occurs when a signal measurement value of an inter-radio access technology (RAT) neighboring cell becomes better than a threshold, and the `B2' event occurs when a signal measurement value of a primary cell (or Pcell) becomes worse than a first threshold and a signal measurement value of the inter-RAT neighboring cell becomes better than a second threshold. The 'I1' event occurs when a measurement value of an interference signal becomes higher than a threshold. The 'C1' event occurs when a channel busy ratio of a new radio (NR) sidelink is above a threshold, and the `C2' event occurs when a channel busy ratio of the NR sidelink is below a threshold. The report configuration may refer to any one of the plurality of events described above. However, the plurality of events described above are merely examples, and embodiments may be applied to other events promised or defined in future standards.

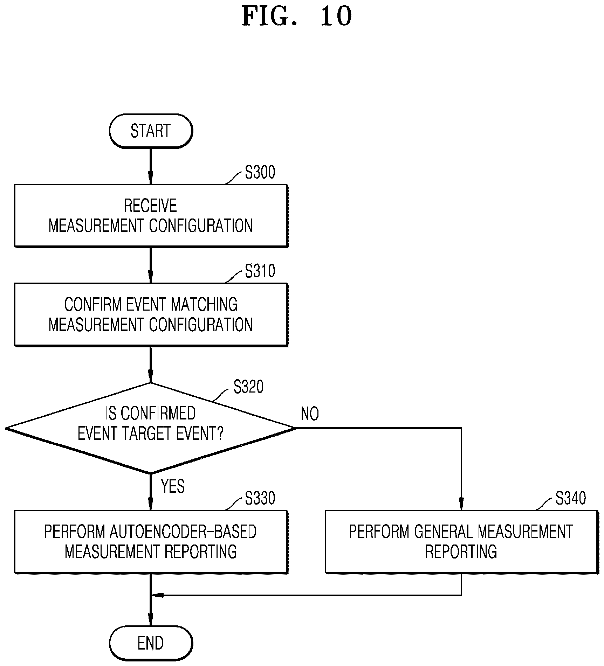

Embodiments may be applied to all of the plurality of events. Also embodiments may be selectively applied to only some of the plurality of events. A detailed embodiment of this aspect is described below with reference to FIG. 10.

In some embodiments, the serving cell may provide the terminal TM with, as a measurement configuration, a measurement ID having a value according to a combination of measurement object information and a report configuration. In this case, the terminal TM may identify, based on the value of the measurement ID, a frequency band, candidate target cell information, and a black list related to at least one signal to be measured and may also identify a specific event that requires (or triggers) a measurement report to be transmitted.

The terminal TM may measure at least one received signal based on the measurement configuration received from the serving cell. In detail, the terminal TM may measure at least one signal corresponding to the measurement object information included in the measurement configuration. The terminal TM may perform a measurement operation and may periodically or aperiodically confirm whether an event corresponding to or matching the measurement configuration has occurred. In detail, the terminal TM may confirm whether a specific event indicated in the report configuration included in the measurement configuration has occurred.

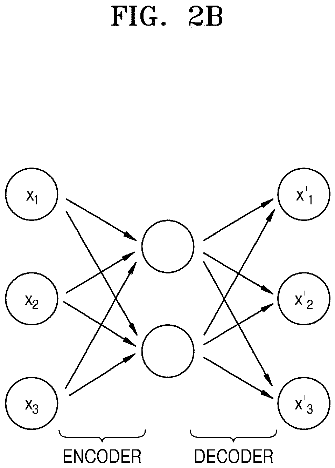

In an embodiment, when the specific event has occurred, the terminal TM may generate a latent vector by encoding measurement results. For example, the terminal TM may generate the latent vector by using a first neural network model corresponding to an encoder trained based on an autoencoder (e.g. trained as part of an autoencoder). A detailed embodiment of the autoencoder is described below with reference to FIG. 2B. Herein, the latent vector may be data representing at least one characteristic of the measurement results and may be compressed to be smaller than the data size of the measurement results.

In an embodiment, in response to the occurrence of the specific event, the terminal TM may transmit a measurement report generated based on the latent vector to the serving cell. For example, when a second neural network model corresponding to a decoder trained based on the autoencoder is stored in the serving cell, the terminal TM may transmit the measurement report including the latent vector to the serving cell. The second neural network may correspond to a decoder trained as part of an autoencoder. As another example, when the second neural network model is not stored in the serving cell, the terminal TM may transmit the measurement report including at least one of the measurement results, instead of the latent vector, to the serving cell. Herein, the function of the terminal TM to transmit the measurement report including the latent vector to the serving cell may be referred to as an autoencoder-based measurement reporting function.

In some embodiments, when the specific event has occurred, the terminal TM may not immediately transmit the measurement report to the serving cell and may actively confirm whether the occurrence of the specific event is reliable by using the latent vector. That is, incorrect measurement results may be temporarily generated during a measurement operation for handover in a specific communication environment, incorrect handover to a target cell may be performed due to the incorrect measurement results, and as a result, a so-called ping-pong case, in which handover back to a previous serving cell needs to be performed, may occur. Therefore, the terminal TM according to an embodiment may generate event occurrence reliability based on the latent vector, may compare the event occurrence reliability with a preset reference value, and may determine, based on a comparison result, whether to transmit the measurement report to the serving cell. The event occurrence reliability may be referred to herein as an event occurrence reliability value. Herein, the function of the terminal TM to actively determine whether to transmit the measurement report even when the specific event has occurred may be referred to as a measurement reporting determination function. In some embodiments, the serving cell, instead of the terminal TM, may confirm, based on the latent vector, whether the occurrence of the specific event is reliable.

In an embodiment, the terminal TM may support at least one of the autoencoder-based measurement reporting function and the measurement reporting determination function, and to notify the serving cell of this, the terminal TM may provide the serving cell with capability information indicating at least one handover-related function that may be supported by the terminal TM. In some embodiments, the terminal TM may transmit the capability information to the serving cell through an RRC signaling step or a certain step with the serving cell. In an embodiment, the serving cell may process, based on the capability information of the terminal TM, the measurement report received from the terminal TM.

For example, the serving cell may confirm, through the capability information of the terminal TM, that the autoencoder-based measurement reporting function may be supported by the terminal TM and may recognize that the measurement report to be received from the terminal TM later includes the latent vector. Thereafter, the serving cell may decode the latent vector of the measurement report received from the terminal TM by using the second neural network model.

For example, the serving cell may confirm, through the capability information of the terminal TM, that the measurement reporting function may be supported by the terminal TM and may recognize that the measurement report to be received from the terminal TM later has high reliability. Thereafter, the serving cell may control a next handover step, e.g., a handover operation, by fully using the measurement report received from the terminal TM, without separate analysis of the measurement report.

The terminal TM according to an embodiment may encode measurement results required by a serving cell for handover into a latent vector by using a neural network model trained based on an autoencoder and may transmit the latent vector to the serving cell, thereby significantly reducing signaling overhead for handover.

In addition, the terminal TM according to an embodiment may confirm, based on the latent vector, whether an event that has occurred is reliable and may actively determine, based on a confirmation result, whether to transmit a measurement report, thereby reducing unnecessary handover. As a result, wireless resources of the communication system 1 may be efficiently used.

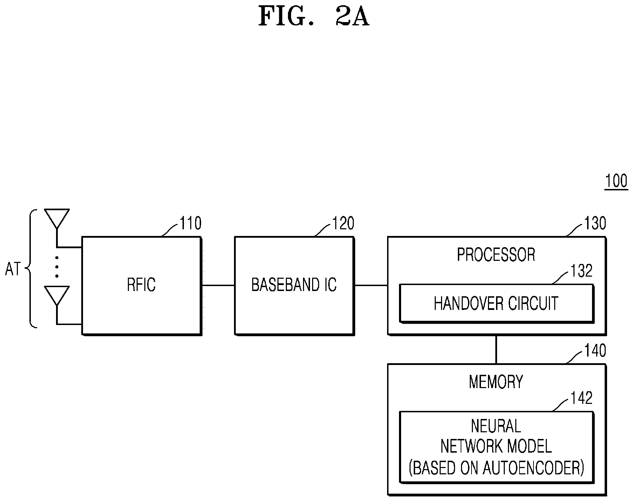

FIG. 2A is a block diagram schematically illustrating a terminal 100 according to an embodiment, and FIG. 2B is a diagram illustrating an autoencoder serving as a basis component according to embodiments. FIG. 2B illustrates an implementation of an autoencoder, which is merely an example, and the autoencoder is not limited thereto.

Referring to FIG. 2A, the terminal 100 may include a plurality of antennas AT, a radio frequency (RF) integrated circuit (IC) 110, a baseband IC 120, a processor 130, and a memory 140. In an embodiment, the processor 130 is a single processor, and in another embodiment, the processor 130 includes at least one processor (e.g. one or more processors). The implementation of the terminal 100 illustrated in FIG. 2A is merely an example, and thus, embodiments are not limited thereto, and the terminal 100 may include more or fewer components.

The RFIC 110 may perform functions, such as band conversion and amplification of a signal, for transmitting and receiving the signal through a wireless channel by using the antennas AT. In detail, the RFIC 110 may up-convert a baseband signal provided from the baseband IC 120 into an RF band signal and transmit the RF band signal through the antennas AT, and may down-convert an RF band signal received through the antennas AT into a baseband signal. For example, the RFIC 110 may include a transmission filter, a reception filter, an amplifier, a mixer, an oscillator, a digital-to-analog converter (DAC), an analog-to-digital converter (ADC), etc. In addition, the RFIC 110 may further include a plurality of RF chains (not shown) and may perform beamforming by using the antennas AT. For beamforming, the RFIC 110 may adjust a phase and a magnitude of each of signals transmitted and received through the antennas AT. Furthermore, the RFIC 110 may perform multi input multi output (MIMO) and may receive multiple layers while performing a MIMO operation.

The baseband IC 120 may perform a conversion operation between a baseband signal and a bit stream according to a physical layer standard of a system. For example, the baseband IC 120 may generate complex symbols by encoding and modulating a transmission bit stream during data transmission. In addition, the baseband IC 120 may restore a reception bit stream by demodulating and decoding a baseband signal provided from the RFIC 110 during data reception.

The RFIC 110 and the baseband IC 120 may transmit and receive signals, as described above. Each of the RFIC 110 and the baseband IC 120 may be referred to as a transmitter, a receiver, a transceiver, or a communicator. Furthermore, at least one of the RFIC 110 and the baseband IC 120 may include a plurality of communication modules for supporting a plurality of different wireless access technologies. In addition, at least one of the RFIC 110 and the baseband IC 120 may include different communication modules for processing signals of different frequency bands. For example, the different wireless access technologies may include NR technology, LTE technology, etc. In addition, the different frequency bands may include a super high frequency band, a millimeter wave band, etc. The terminal 100 may communicate with a cell by using the RFIC 110 and the baseband IC 120.

The processor 130 may control overall operations of the terminal 100. In an embodiment, the processor 130 may include a handover circuit 132 that performs at least one of an operation of encoding measurement results for handover and an operation of determining whether to transmit a measurement report to a serving cell.

The memory 140 may store data, such as a basic program and an application program, for an operation of the terminal 100. In an embodiment, the memory 140 may store a neural network model 142 based on an autoencoder. The neural network model 142 may include a first neural network model corresponding to an encoder trained based on the autoencoder and a second neural network model corresponding to a decoder trained based on the autoencoder. For instance, the first neural network model may correspond to an encoder of an autoencoder, and the second neural network model may correspond to a decoder of the autoencoder.

Referring further to FIG. 2B for a detailed description of the autoencoder, the autoencoder may include an encoder and a decoder. The encoder may be a cognitive network and may convert input data x₁, x₂, and x₃ into a latent vector (or an internal representation), and the decoder may be a generative network and may convert the latent vector into output data y₁, y₂, and y₃. Both the encoder and decoder may be artificial neural networks. For example, in the autoencoder, the number of neurons in an input layer and an output layer may be the same, and the number of neurons in a hidden layer may be less than the number of neurons in the input layer or the output layer. The autoencoder may perform unsupervised learning to generate a latent vector indicating important characteristics of the input data x₁, x₂, and x₃, thereby generating a neural network model. The neural network model may be referred to as an autoencoder-based neural network model.

Training an autoencoder may comprise adjusting weights (e.g. parameters) of the autoencoder (e.g. of the encoder and decoder) to minimize an error (e.g. a difference) between the input data and output data. That is, the autoencoder may be trained to encode the input data as a latent vector, and then decode the latent vector to reproduce the input data. Accordingly, the output data may be referred to as x₁', x₂,' and x₃', as predictions (e.g. reproductions) of the input data x₁, x₂, and x₃. The autoencoder may therefore be trained to learn a compressed representation of the input data (the latent vector).

The autoencoder applied to embodiments may correspond to any one of an 'uncomplete' autoencoder, a 'stacked' autoencoder, a 'denoising' autoencoder, a 'sparse' autoencoder, a 'variational' autoencoder, etc.

Referring back to FIG. 2A, in an embodiment, the handover circuit 132 may generate a latent vector by encoding measurement results for handover, based on the neural network model stored in the memory 140. The handover circuit 132 may generate a measurement report including the latent vector and may transmit the measurement report to the serving cell through the antennas AT, the RFIC 110, and the baseband IC 120.

In an embodiment, the handover circuit 132 may determine, based on the latent vector, whether to transmit the measurement report to the serving cell. When a specific event indicated in a received measurement configuration has occurred, the handover circuit 132 may confirm whether the occurrence of the event is reliable by using the latent vector. In detail, the handover circuit 132 may generate event occurrence reliability based on the latent vector and, when the event occurrence reliability is greater than a reference value, may determine to transmit the measurement report to the serving cell. In an embodiment, the latent vector may represent characteristic of measurement results in a communication environment in which a current handover event has occurred, and the characteristic may include characteristic regarding the event occurrence reliability. Specifically, the value of the latent vector may indicate the possibility that a ping-pong case will occur. In addition, when the event occurrence reliability is less than or equal to the reference value, the handover circuit 132 may determine not to transmit the measurement report to the serving cell, may perform a measurement operation, and may continuously monitor whether the specific event has occurred.

In an embodiment, the handover circuit 132 may manage a handover-related function supported by the terminal 100. For example, the handover circuit 132 may manage a function that may be supported by the terminal 100, among an autoencoder-based measurement reporting function and a measurement reporting determination function, and may generate capability information indicating the function that may be supported by the terminal 100. The handover circuit 132 may transmit the capability information to the serving cell through the antennas AT, the RFIC 110, and the baseband IC 120.

In an embodiment, the handover circuit 132 may provide the serving cell with the second neural network model required for decoding the latent vector. In some embodiments, the serving cell may independently generate the second neural network model separately from the terminal 100.

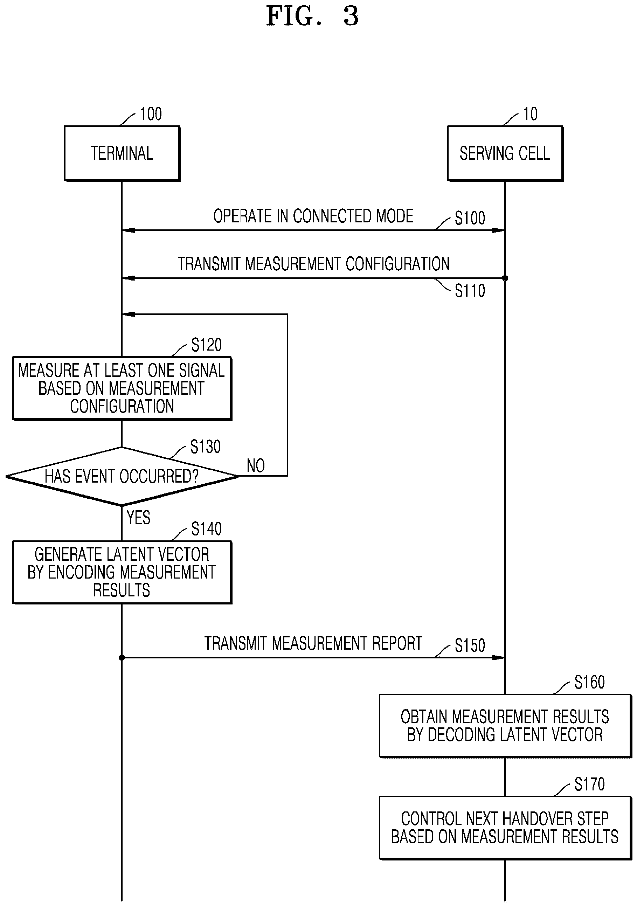

FIG. 3 is a flowchart illustrating a handover procedure in a communication system according to an embodiment. Descriptions made below may be based on a specification defined in the 3GPP standard (e.g., 3GPP TS 38.331).

Referring to FIG. 3, in operation S100, the terminal 100 may receive a network service from a serving cell 10 by operating in a connected mode in an RRC connection state with the serving cell 10.

In operation S110, the serving cell 10 may transmit a measurement configuration to the terminal 100. The serving cell 10 may determine measurement object information and a report configuration associated with a specific measurement ID (or measID) in the measurement configuration and may transmit an RRC reconfiguration message including the measurement configuration to the terminal 100. The report configuration may indicate a specific event that triggers the terminal 100 to perform measurement reporting and may indicate which object (e.g. which parameter) is to be measured by the terminal 100 as an electric field strength (e.g. indicating an electric field strength). For example, the report configuration may indicate which one of reference signal received power (RSRP), reference signal received quality (RSRQ), signal to interference plus noise ratio (SINR), received signal code power (RSCP), and received energy from pilot signal to noise density (EcN0) is to be measured (e.g. based on a measured electric field strength). Herein, an embodiment in which RSRP of the terminal 100 is measured is mainly described, but it will be understood that this is an example and embodiments are not limited thereto.

In operation S120, the terminal 100 may measure at least one signal based on the measurement configuration received in operation S100. The terminal 100 may generate a plurality of measurement results by measuring at least one signal indicated in the measurement configuration. The plurality of measurement results may include a measurement result regarding (e.g. indicating) an electric field strength, such as RSRP, indicated in the measurement configuration and at least one measurement result predetermined to generate a latent vector. Herein, the plurality of measurement results may be referred to as a measurement result set.

In operation S130, the terminal 100 may confirm whether an event corresponding to or matching the measurement configuration received in operation S100 has occurred. For example, the terminal 100 may confirm, based on a measurement result corresponding to an electric field strength (e.g., RSRP), among the plurality of measurement results generated in operation S120, whether an event occurrence condition is satisfied.

When the answer is 'NO' in operation S130, the terminal 100 may re-perform operation S120.

When the answer is `YES' in operation S130, in operation S140, the terminal 100 may generate a latent vector by encoding the measurement results generated in operation S120. For example, the terminal 100 may generate the latent vector from the measurement results by using a first neural network model corresponding to an encoder trained based on an autoencoder.

In operation S150, the terminal 100 may transmit, to the serving cell 10, a measurement report including the latent vector generated in operation S140. The terminal 100 may know in advance through certain signaling (e.g., RRC signaling) that the serving cell 10 may decode the latent vector.

In operation S160, the serving cell 10 may obtain a plurality of measurement results by decoding the latent vector. For example, the serving cell 10 may obtain the measurement results from the latent vector by using a second neural network model corresponding to a decoder trained based on the autoencoder. In an embodiment, the serving cell 10 may receive the second neural network model from the terminal 100. In some embodiments, the serving cell 10 may directly generate the second neural network model through autoencoder-based learning.

In operation S170, the serving cell 10 may control a next handover step based on the measurement results obtained in operation S160.

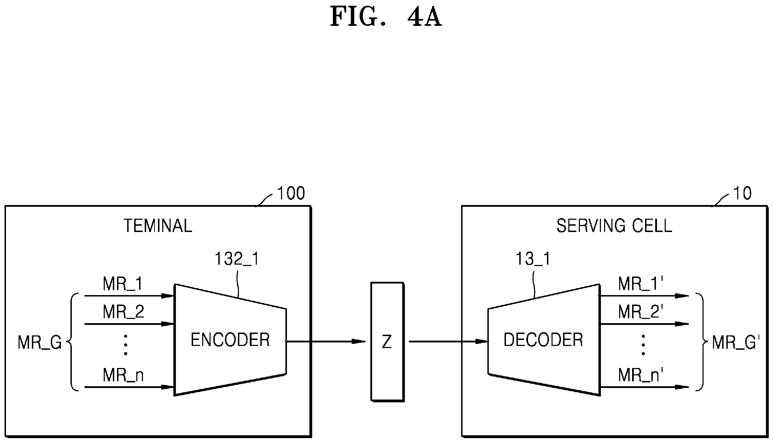

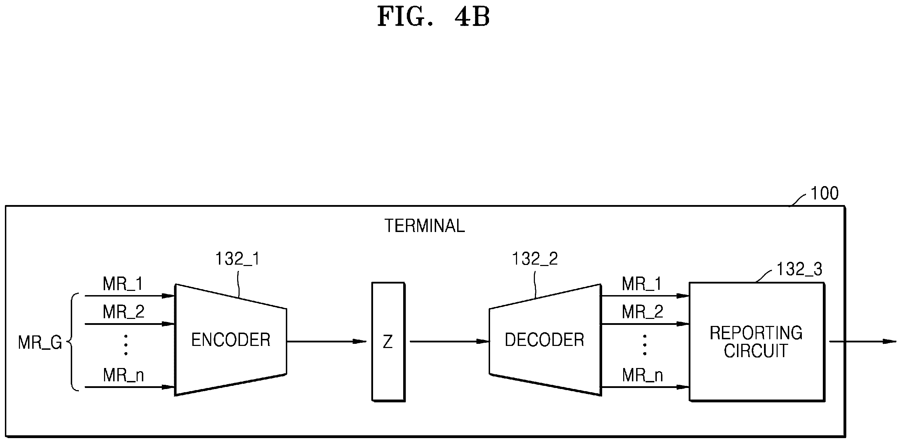

FIG. 4A is a diagram schematically illustrating an implementation of the terminal 100 and the serving cell 10 according to an embodiment, and FIG. 4B is a diagram schematically illustrating an implementation of the terminal 100 according to an embodiment. FIG. 4B assumes an embodiment in which the serving cell 10 is unable to decode a latent vector.

Referring to FIG. 4A, the terminal 100 may include an encoder 132_1, and the serving cell 10 may include a decoder 13_1. The encoder 132_1 may correspond to the first neural network model described above, and the decoder 13_1 may correspond to the second neural network model described above.

In an embodiment, the terminal 100 may input, to the encoder 132_1, a plurality of measurement results MR_1 to MR_n generated through a measurement operation for handover as a measurement result set MR_G. The encoder 132_1 may generate a latent vector Z by encoding the measurement result set MR_G. For example, the plurality of measurement results MR_1 to MR_n may include measurement results for a signal corresponding to at least one of the serving cell 10 and a candidate target cell for handover. The signal may be identified through the measurement configuration received from the serving cell 10.

In an embodiment, the terminal 100 may transmit the latent vector Z to the serving cell 10, and the serving cell 10 may input the latent vector Z to the decoder 13_1. The decoder 13_1 may obtain a measurement result set MR_G' including a plurality of measurement results MR _1' to MR_n' by decoding the latent vector Z.

Referring further to FIG. 4B, the terminal 100 may include an encoder 132_1, a decoder 132_2, and a reporting circuit 132_3. The encoder 132_1 may correspond to the first neural network model described above, and the decoder 132_2 may correspond to the second neural network model described above.

In an embodiment, the terminal 100 may input, to the encoder 132_1, a plurality of measurement results MR_1 to MR_n generated through a measurement operation for handover as a measurement result set MR_G. The encoder 132_1 may generate a latent vector Z by encoding the measurement result set MR_G.

In an embodiment, the terminal 100 may input the latent vector Z to the decoder 132_2. The decoder 132_2 may output the plurality of measurement results MR_1 to MR_n by decoding the latent vector Z.

In an embodiment, the reporting circuit 132_3 may receive the plurality of measurement results MR_1 to MR_n and may generate a measurement report including at least one of the plurality of measurement results MR_1 to MR_n.

The terminal 100 may use the generated latent vector Z to determine whether to perform measurement reporting or perform any operation for effectively performing handover.

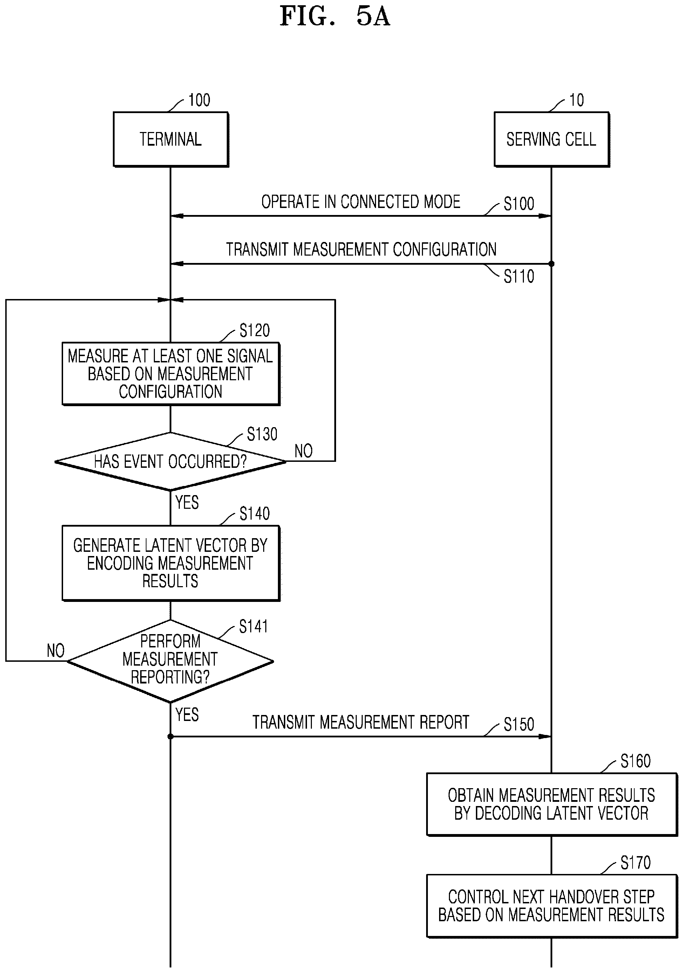

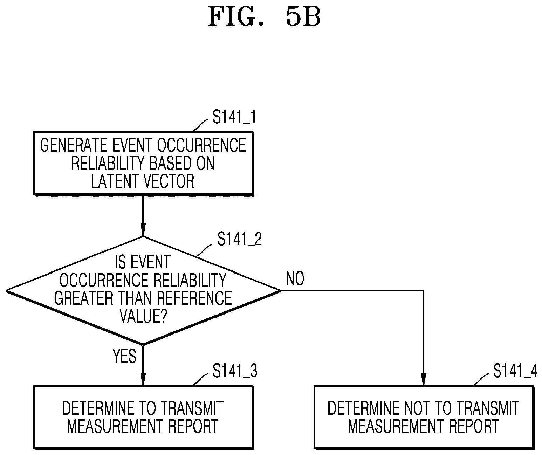

FIG. 5A is a flowchart illustrating a handover procedure in a communication system according to an embodiment, and FIG. 5B is a flowchart illustrating a detailed embodiment of operation S141 of FIG. 5A.

Referring to FIG. 5A, in operation S100, the terminal 100 may operate in a connected mode with the serving cell 10.

In operation S110, the serving cell 10 may transmit a measurement configuration to the terminal 100.

In operation S120, the terminal 100 may measure at least one signal based on the measurement configuration received in operation S100.

In operation S130, the terminal 100 may confirm whether an event matching the measurement configuration received in operation S100 has occurred.

When the answer is 'NO' in operation S130, the terminal 100 may re-perform operation S120.

When the answer is `YES' in operation S130, in operation S140, the terminal 100 may generate a latent vector by encoding measurement results generated in operation S120.

In operation S141, the terminal 100 may determine, based on the latent vector generated in operation S140, whether to perform measurement reporting. For example, the terminal 100 may generate event occurrence reliability from the latent vector, may compare the event occurrence reliability with a reference value, and may determine, based on a comparison result, whether to perform measurement reporting. That is, only when the event occurrence reliability generated from the latent vector is greater than the reference value, the terminal 100 may transmit a measurement report including the latent vector to the serving cell.

When the answer is 'NO' in operation S141, the terminal 100 may re-perform operation S120.

When the answer is `YES' in operation S141, in operation S150, the terminal 100 may transmit the measurement report including the latent vector to the serving cell 10. In some embodiments, when the serving cell 10 is unable to decode the latent vector, as in the embodiment of FIG. 4B described above, the terminal 100 may transmit a measurement report generated by decoding the latent vector to the serving cell 10.

In operation S160, the serving cell 10 may obtain a plurality of measurement results by decoding the latent vector. In some embodiments, when the serving cell 10 is unable to decode the latent vector, as in the embodiment of FIG. 4B described above, the terminal 100 may obtain the measurement results directly from the measurement report (e.g. without decoding).

In operation S170, the serving cell 10 may control a next handover step based on the measurement results obtained in operation S160. For example, the serving cell 10 may fully use the obtained measurement results by trusting the occurrence of the event that has triggered the measurement report received from the terminal 100. The serving cell 10 may know in advance that the terminal 100 supports a measurement reporting determination function.

Referring further to FIG. 5B, operation S141 of FIG. 5A may include operations S141_1 to S141_4.

In operation S141_1, the terminal 100 may generate event occurrence reliability based on the latent vector.

In operation S141_2, the terminal 100 may compare the event occurrence reliability with a reference value. For example, the terminal 100 may confirm whether the event occurrence reliability is greater than the reference value.

When the answer is `YES' in operation S141_2, in operation S141_3, the terminal 100 may determine to transmit the measurement report including the latent vector to the serving cell 10.

When the answer is 'NO' in operation S141_2, in operation S141_4, the terminal 100 may determine not to transmit the measurement report including the latent vector to the serving cell 10.

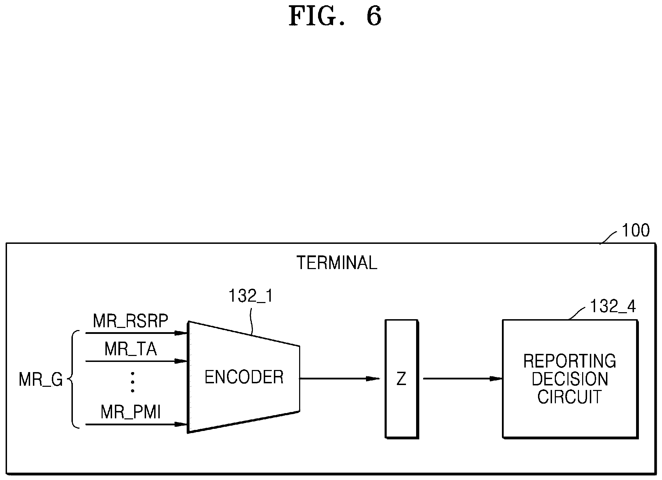

FIG. 6 is a diagram schematically illustrating an implementation of the terminal 100 according to an embodiment. FIG. 6 illustrates an embodiment assuming the occurrence of an 'A3' event. However, this is merely an example, and thus, embodiments are not limited thereto, and the types of measurement results generated through a measurement operation may vary depending on the type of an event.

Referring to FIG. 6, the terminal 100 may include an encoder 132_1 and a reporting decision circuit 132_4. The encoder 132_1 may correspond to the first neural network model described above.

In an embodiment, the terminal 100 may generate a first measurement result MR_RSRP, a second measurement result MR_TA, and a third measurement result MR_PMI for a serving cell and a candidate target cell through a measurement operation for handover. For example, the first measurement result MR_RSRP may include RSRP of a signal of the serving cell and RSRP of a signal of the candidate target cell. The second measurement result MR_TA may include timing advance information between the terminal 100 and the serving cell and timing advance information between the terminal 100 and the candidate target cell. In addition, the third measurement result MR_PMI may include precoding matrix indication (PMI) information for the serving cell and PMI information for the candidate target cell. In some embodiments, the second measurement result MR_TA may be replaced with any one of results measured by various methods to indicate a distance from each of the serving cell and the candidate target cell to the terminal 100, and the third measurement result MR_PMI may be replaced with any one of results measured by various methods to indicate a direction toward the serving cell and a direction toward the candidate target cell based on the terminal 100.

In an embodiment, the terminal 100 may input, to the encoder 132_1, the first to third measurement results MR_RSRP, MR_TA, and MR_PMI as a measurement result set MR_G. The encoder 132_1 may generate a latent vector Z by encoding the measurement result set MR G.

In an embodiment, the reporting decision circuit 132_4 may determine, based on the latent vector Z, whether to transmit a measurement report to the serving cell. For example, the reporting decision circuit 132_4 may generate event occurrence reliability by using the latent vector Z and, when the event occurrence reliability is greater than a reference value, may determine to transmit the measurement report to the serving cell.

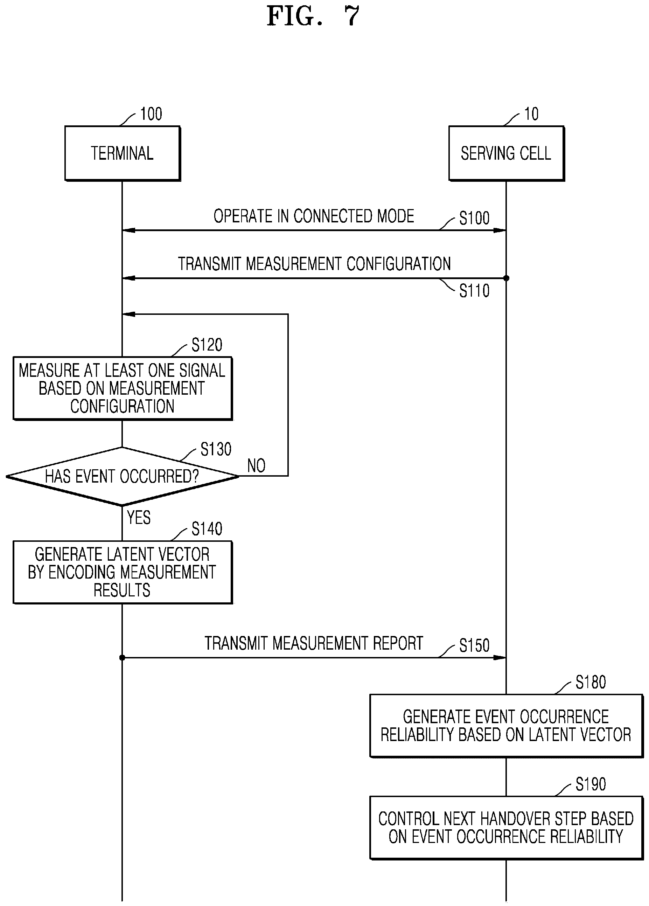

FIG. 7 is a flowchart illustrating a handover procedure in a communication system according to an embodiment. The embodiment of FIG. 7 corresponds to an embodiment in which the serving cell 10, instead of the terminal 100, generates event occurrence reliability based on a latent vector.

Referring to FIG. 7, in operation S100, the terminal 100 may operate in a connected mode with the serving cell 10.

In operation S110, the serving cell 10 may transmit a measurement configuration to the terminal 100.

In operation S120, the terminal 100 may measure at least one signal based on the measurement configuration received in operation S100.

In operation S130, the terminal 100 may confirm whether an event matching the measurement configuration received in operation S100 has occurred.

When the answer is 'NO' in operation S130, the terminal 100 may re-perform operation S120.

When the answer is `YES' in operation S130, in operation S140, the terminal 100 may generate a latent vector by encoding measurement results generated in operation S120.

In operation S150, the terminal 100 may transmit a measurement report including the latent vector to the serving cell 10.

In operation S180, the serving cell 10 may generate event occurrence reliability based on the latent vector.

In operation S190, the serving cell 10 may control a next handover step based on the event occurrence reliability. For example, when the event occurrence reliability is less than or equal to a reference value, the serving cell 10 may confirm that the event that has occurred is unreliable and may re-transmit the measurement configuration in operation S110 to the terminal 100. When the event occurrence reliability is greater than the reference value, the serving cell 10 may control a next handover step to be performed.

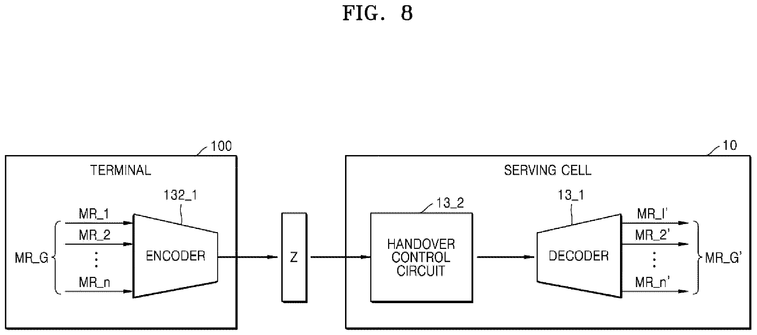

FIG. 8 is a diagram schematically illustrating an implementation of the terminal 100 and the serving cell 10 according to an embodiment. FIG. 8 illustrates an implementation of the serving cell 10 of FIG. 7.

Referring to FIG. 8, the terminal 100 may include an encoder 132_1, and the serving cell 10 may include a decoder 13_1 and a handover control circuit 13_2. The encoder 132_1 may correspond to the first neural network model described above, and the decoder 13_1 may correspond to the second neural network model described above.

In an embodiment, the terminal 100 may input, to the encoder 132_1, a plurality of measurement results MR_1 to MR_n generated through a measurement operation for handover as a measurement result set MR_G. The encoder 132_1 may generate a latent vector Z by encoding the measurement result set MR_G.

In an embodiment, the terminal 100 may transmit the latent vector Z to the serving cell 10, and the serving cell 10 may input the latent vector Z to the handover control circuit 13_2. The handover control circuit 13_2 may generate event occurrence reliability based on the latent vector Z and may control a next handover step based on the event occurrence reliability. For example, when the event occurrence reliability is greater than a reference value, the handover control circuit 13_2 may provide the latent vector Z to the decoder 13_1. When the event occurrence reliability is less than or equal to the reference value, the handover control circuit 13_2 may not provide the latent vector Z to the decoder 13_1 and may re-transmit a previously transmitted measurement configuration to the terminal 100.

In an embodiment, the decoder 13_1 may obtain a measurement result set MR_G' including a plurality of measurement results MR_1' to MR_n' by decoding the latent vector Z provided from the handover control circuit 13_2. The handover control circuit 13_2 may control the next handover step by using the measurement result set MR_G'.

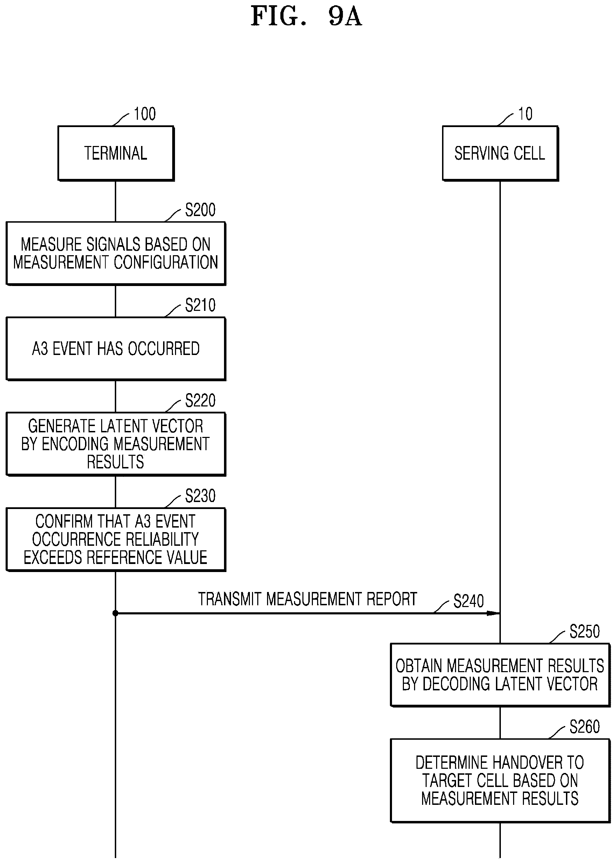

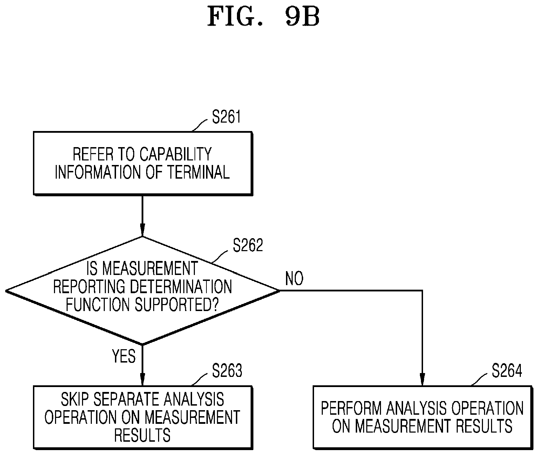

FIG. 9A is a flowchart illustrating a handover procedure in a communication system according to an embodiment, and FIG. 9B is a flowchart illustrating a detailed embodiment of operation S260 of FIG. 9A. FIGS. 9A and 9B assume an embodiment in which measurement reporting is performed according to the occurrence of an 'A3' event, although embodiments are not limited to this specific event.

Referring to FIG. 9A, in operation S200, the terminal 100 may measure a signal of the serving cell 10 and a signal of a candidate target cell based on a measurement configuration.

In operation S210, the terminal 100 may confirm, based on at least one of measurement results generated in operation S200, that an 'A3' event has occurred.

In operation S220, the terminal 100 may generate a latent vector by encoding the measurement results generated in operation S200. For example, the terminal 100 may input the measurement results to a first neural network model corresponding to an encoder trained based on an autoencoder and may obtain an output from the first neural network model. The output may be the latent vector.

In operation S230, the terminal 100 may confirm that 'A3' event occurrence reliability is greater than a reference value. For example, the terminal 100 may generate the 'A3' event occurrence reliability based on the latent vector generated in operation S220 and may compare the `A3' event occurrence reliability with a reference value.

In operation S240, the terminal 100 may transmit a measurement report including the latent vector generated in operation S220 to the serving cell 10.

In operation S250, the serving cell 10 may obtain measurement results by decoding the latent vector. For example, the serving cell 10 may input the latent vector to a second neural network model corresponding to a decoder trained based on the autoencoder and may obtain an output from the second neural network model. The output may be the measurement results.

In operation S260, the serving cell 10 may determine handover to the target cell based on the measurement results obtained in operation S250. For example, the serving cell 10 may recognize that the terminal 100 supports a measurement reporting determination function and may trust the measurement report received from the terminal 100. Therefore, in response to the reception of the measurement report, the serving cell 10 may determine handover due to the occurrence of the `A3' event and may determine the target cell by referring to the measurement results.

Referring further to FIG. 9B, operation S260 may include operations S261 to S264.

In operation S261, the serving cell 10 may refer to capability information of the terminal 100.

In operation S262, the serving cell 10 may confirm, based on the capability information, whether the terminal 100 supports the measurement reporting determination function.

When the answer is `YES' in operation S262, in operation S263, the serving cell 10 may skip a separate analysis operation on the measurement results. The serving cell 10 may determine handover according to the occurrence of the 'A3' event based only on the reception of the measurement report.

When the answer is 'NO' in operation S262, in operation S264, the serving cell 10 may perform an analysis operation on the measurement results. The serving cell 10 may determine handover according to the occurrence of the `A3' event based on an analysis result.

FIG. 10 is a flowchart illustrating an operating method of a terminal according to an embodiment.

Referring to FIG. 10, in operation S300, the terminal may receive a measurement configuration from a serving cell.

In operation S310, the terminal may confirm an event matching the measurement configuration.

In operation S320, the terminal may determine whether the event confirmed in operation S310 is a target event. Herein, the target event may refer to an event for which autoencoder-based measurement reporting is preset to be performed, among a plurality of handover-related events. For example, the target event may correspond to an 'A3' event among the plurality of handover-related events. However, this is merely an example, and thus, embodiments are not limited thereto, and the plurality of handover-related events may all correspond to the target event.

When the answer is `YES' in operation S320, in operation S330, the terminal may perform autoencoder-based measurement reporting. Herein, the autoencoder-based measurement reporting may include at least one of an operation of generating a latent vector by using a neural network model trained based on an autoencoder and an operation of determining, based on the latent vector, whether to perform measurement reporting.

When the answer is 'NO' in operation S320, in operation S340, the terminal may perform general measurement reporting.

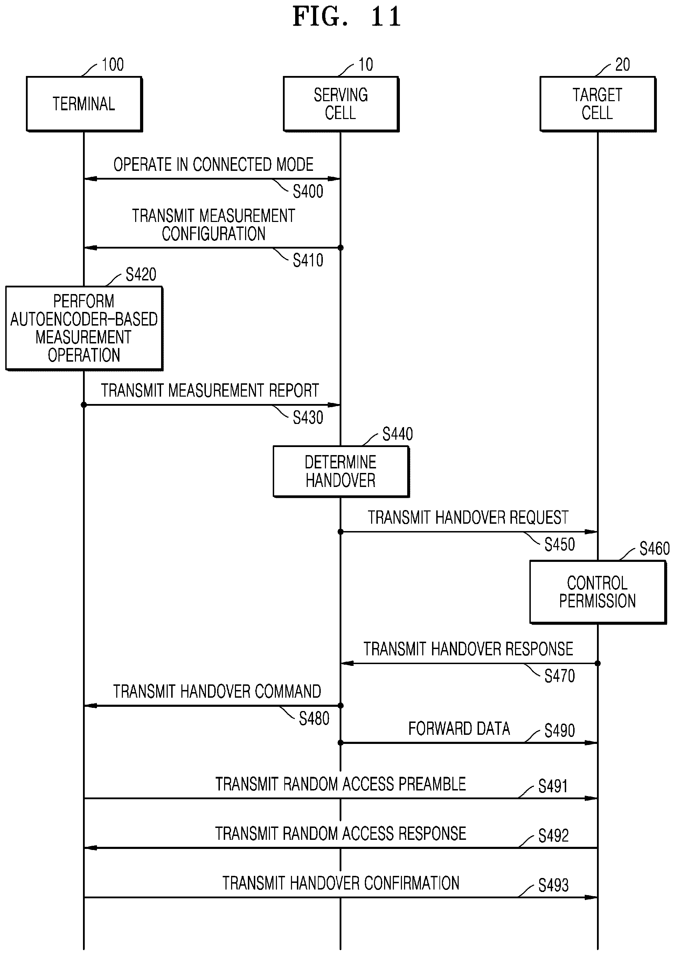

FIG. 11 is a flowchart illustrating a handover procedure in a communication system according to an embodiment.

Referring to FIG. 11, in operation S400, the terminal 100 may receive a network service from the serving cell 10 by operating in a connected mode in an RRC connection state with the serving cell 10.

In operation S410, the serving cell 10 may transmit a measurement configuration to the terminal 100.

In operation S420, the terminal 100 may perform an autoencoder-based measurement operation.

In operation S430, the terminal 100 may transmit a measurement report including a latent vector to the serving cell 10.

In operation S440, the serving cell 10 may determine handover to a target cell 20 based on the received measurement report.

In operation S450, the serving cell 10 may transmit a handover request to the target cell 20.

In operation S460, the target cell 20 may control permission (or approval) for handover.

In operation S470, the target cell 20 may transmit a handover response to the serving cell 10.

In operation S480, the serving cell 10 may transmit a handover command to the terminal 100. In response to the handover command, the terminal 100 may suspend existing communication and may release the connection with the serving cell 10.

In operation S490, the serving cell 10 may forward data to the target cell 20. As an example, the serving cell 10 may deliver necessary data to the target cell 20 so that the target cell can effectively communicate with the terminal 100.

In operation S491, the terminal 100 may transmit a random access preamble to the target cell 20 through a random access channel (RACH).

In operation S492, when the random access preamble is properly received, the target cell 20 may transmit, to the terminal 100, a random access response including a timing advance (TA) command that is information for synchronization.

In operation S493, the terminal 100 may transmit, to the target cell 20, a handover confirmation indicating that handover has been completed based on uplink resource allocation information specified in the random access response, thereby completing the handover procedure.

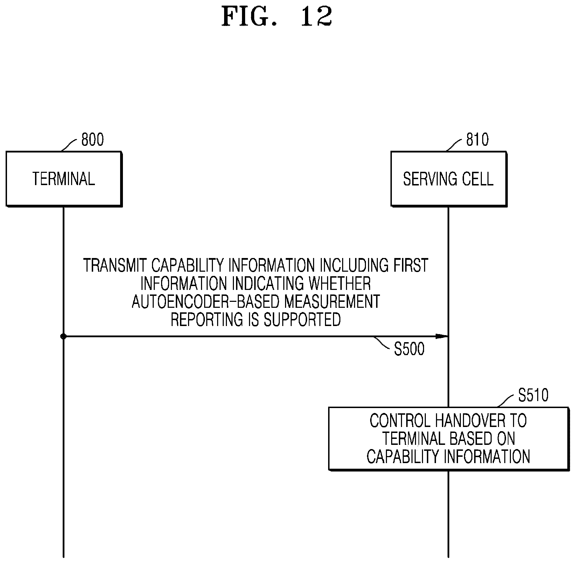

FIG. 12 is a flowchart illustrating a handover operation in a communication system according to an embodiment.

Referring to FIG. 12, in operation S500, a terminal 800 may transmit, to a serving cell 810, capability information including first information indicating whether autoencoder-based measurement reporting is supported by the terminal 800. In some embodiments, the capability information may further include second information indicating whether a measurement reporting determination function using a latent vector is supported by the terminal 800.

In operation S510, the serving cell 810 may control handover to the terminal 800 based on the capability information received in operation S500.

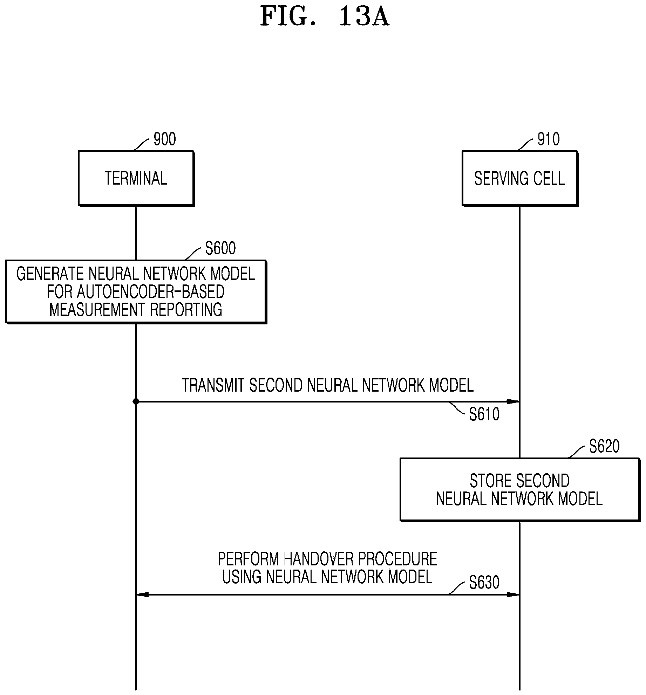

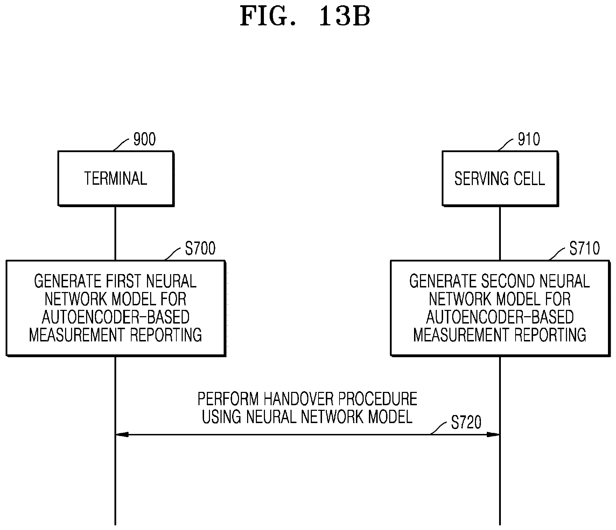

FIGS. 13A and 13B are flowcharts illustrating a method of generating a neural network model based on an autoencoder in a communication system, according to an embodiment.

Referring to FIG. 13A, in operation S600, a terminal 900 may generate a neural network model for autoencoder-based measurement reporting. For example, during mass production of the terminal 900, the terminal 900 may obtain training measurement results and may train an autoencoder based on the training measurement results to generate a first neural network model corresponding to an encoder of the autoencoder and a second neural network model corresponding to a decoder of the autoencoder. The first and second neural network models may be stored in a certain memory of the terminal 900.

In operation S610, the terminal 900 may transmit, to a serving cell 910, the second neural network model required for decoding a latent vector.

In operation S620, the serving cell 810 may store the second neural network model received in operation S610 in a certain memory.

In operation S630, the terminal 900 and the serving cell 810 may perform a handover procedure using a neural network model. For example, the terminal 900 may generate a latent vector from measurement results by using the first neural network model and transmit the latent vector to the serving cell 810, and the serving cell 810 may obtain measurement results from the latent vector by using the second neural network model.

Referring further to FIG. 13B, in operation S700, the terminal 900 may generate a first neural network model for autoencoder-based measurement reporting.

In operation S710, the serving cell 910 may generate a second neural network model for autoencoder-based measurement reporting. For example, first algorithm that is the basis for generating the first neural network model of the terminal 900 may be the same as second algorithm that is the basis for generating the second neural network model of the serving cell 910. As a result, operation S710 may be performed independently from operation S700.

In operation S720, the terminal 900 and the serving cell 910 may perform a handover procedure using a neural network model including the first and second neural network models.

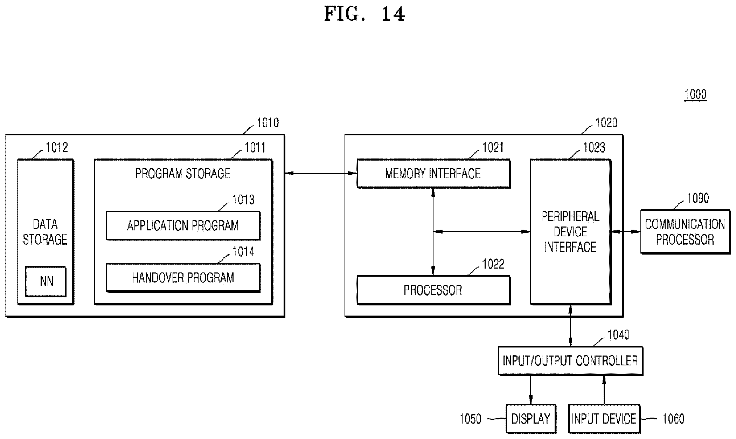

FIG. 14 is a block diagram illustrating an electronic device 1000 according to an embodiment.

Referring to FIG. 14, the electronic device 1000 may include a memory 1010, a processor unit 1020, an input/output controller 1040, a display 1050, an input device 1060, and a communication processor 1090. Here, a plurality of memories 1010 may be provided. Each component will be described as follows.

The memory 1010 may include a program storage 1011 that stores a program for controlling an operation of the electronic device 1000 and a data storage 1012 that stores data generated during program execution. The data storage 1012 may store data required for operations of an application program 1013 and a handover program 1014. In an embodiment, the data storage 1012 may store a neural network model NN trained based on an autoencoder according to embodiments. The neural network model NN may be used when the handover program 1014 is executed.

The program storage 1011 may include the application program 1013 and the handover program 1014. Here, a program included in the program storage 1011 may be a set of instructions and may be expressed as an instruction set. The application program 1013 may include program code for executing various applications operating in the electronic device 1000. That is, the application program 1013 may include code (or commands) related to various applications driven by a processor 1022. The handover program 1014 may include control code for performing a measurement operation for handover according to embodiments.

In an embodiment, by executing the handover program 1014, the processor 1022 may encode measurement results to generate a latent vector. In addition, by executing the handover program 1014, the processor 1022 may determine, based on the latent vector, whether to perform measurement reporting to a serving cell.

The electronic device 1000 may include the communication processor 1090 that performs a communication function for voice communication and data communication. The processor 1022 may receive an RRC reconfiguration message from a source cell through the communication processor 1090, may perform a measurement operation on objects in response to the received RRC reconfiguration message, and may report, to the source cell through the communication processor 1090, a measurement result of a specific object satisfying a certain condition.

A peripheral device interface 1023 may control a connection among the input/output controller 1040, the communication processor 1090, the processor 1022, and a memory interface 1021. The processor 1022 uses at least one software program to control a plurality of cells to provide a corresponding service. In this case, the processor 1022 may execute at least one program stored in the memory 1010 to provide a service corresponding to the program.

The input/output controller 1040 may provide an interface between an input/output device, such as the display 1050 and the input device 1060, and the peripheral device interface 1023. The display 1050 displays state information, an input character, a moving picture, a still picture, etc. For example, the display 1050 may display information about an application program driven by the processor 1022.

The input device 1060 may provide, to the processor unit 1020 through the input/output controller 1040, input data generated by a selection of the electronic device 1000. In this case, the input device 1060 may include a keypad including at least one hardware button, a touch pad for sensing touch information, etc. For example, the input device 1060 may provide, to the processor 1022 through the input/output controller 1040, touch information, such as a touch, a touch motion, or a touch release, sensed through the touch pad.

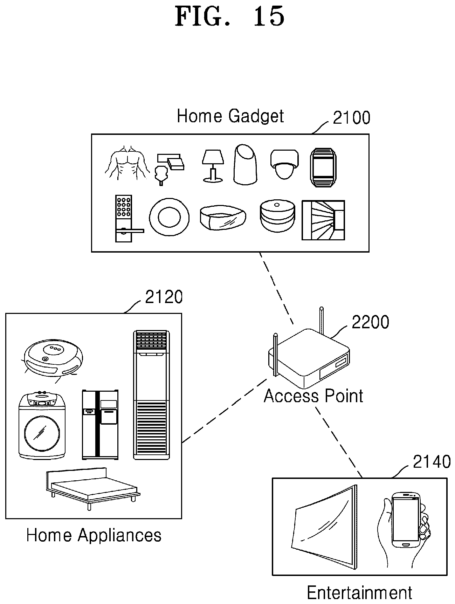

FIG. 15 is a diagram illustrating communication devices for performing a handover operation, according to an embodiment.

Referring to FIG. 15, a home gadget 2100, a home appliance 2120, an entertainment device 2140, and an AP 2200 may perform a handover operation according to embodiments. A plurality of APs 2200 may be respectively located at various points, and the home gadget 2100, the home appliance 2120, and the entertainment device 2140 may be handed over from any one of the plurality of APs 2200 to another AP 2200, based on a measurement operation according to embodiments.

In some embodiments, the home gadget 2100, the home appliance 2120, the entertainment device 2140, and the AP 2200 may constitute an Internet of Things (IoT) network system. The communication devices illustrated in FIG. 15 are merely examples, and it will be understood that a wireless communication device according to an embodiment may be included in other communication devices not illustrated in FIG. 15.

Various changes in form and details may be made therein without departing from the scope of the following claims.

## Claims

1. A method of a terminal, the method comprising:
receiving a measurement configuration from a serving cell;
measuring at least one received signal based on the measurement configuration;
confirming whether an event corresponding to the measurement configuration has occurred;
based on confirming that the event has occurred, generating a latent vector by encoding a measurement result set comprising a plurality of measurement results; and
in response to an occurrence of the event, transmitting, to the serving cell, a measurement report generated based on the latent vector.

2. The method of claim 1, wherein the generating of the latent vector comprises:
inputting the measurement result set to a first neural network model corresponding to an encoder trained based on an autoencoder; and
obtaining an output of the first neural network model as the latent vector.

3. The method of claim 2, wherein, based on a second neural network model corresponding to a decoder trained based on the autoencoder being stored in the serving cell, the measurement report comprises the latent vector.

4. The method of claim 3, further comprising:
generating the second neural network model; and
transmitting the second neural network model to the serving cell.

5. The method of claim 3 or claim 4, further comprising transmitting, to the serving cell, capability information comprising first information indicating support for a measurement reporting function based on the autoencoder.

6. The method of any preceding claim, wherein the plurality of measurement results comprises received signal received powers, time advances, and precoding matrix indications corresponding to the serving cell and a candidate target cell for handover.

7. The method of any preceding claim, wherein the transmitting of the measurement report to the serving cell comprises:
generating an event occurrence reliability value based on the latent vector;
comparing the event occurrence reliability value with a reference value; and
determining, based on a result of the comparing, whether to transmit the measurement report to the serving cell.

8. The method of claim 7, further comprising transmitting, to the serving cell, capability information comprising second information indicating support for a measurement reporting determination function.

9. The method of any claim 7 or claim 8, wherein the determining of whether to transmit the measurement report to the serving cell comprises, based on the event occurrence reliability value being greater than the reference value, determining to transmit the measurement report to the serving cell.

10. The method of any of claims 7-9, wherein, based on a second neural network model corresponding to a decoder trained based on an autoencoder not being stored in the serving cell, the transmitting of the measurement report to the serving cell further comprises:
inputting the latent vector to the second neural network model; and
transmitting, to the serving cell, the measurement report comprising an output of the second neural network model.

11. A method of a serving cell, the operating method comprising:
transmitting a measurement configuration to a terminal;
receiving, from the terminal, a measurement report corresponding to the measurement configuration and based on an autoencoder;
obtaining a measurement result set comprising a plurality of measurement results by decoding a latent vector included in the measurement report; and
controlling a handover operation based on the measurement result set.

12. The method of claim 11, wherein the latent vector is generated based on a first neural network model corresponding to an encoder trained based on the autoencoder, and
the obtaining of the measurement result set comprises:
inputting the latent vector to a second neural network model corresponding to a decoder trained based on the autoencoder; and
obtaining an output of the second neural network model as the measurement result set.

13. The method of claim 12, wherein the first neural network model is generated in the terminal, and
the second neural network model is generated in the serving cell.

14. The method of any of claims 11-13, further comprising receiving, from the terminal, capability information comprising first information indicating a support for a measurement reporting function based on the autoencoder.

15. The method of claim 14, wherein the capability information further comprises second information indicating the support for a measurement reporting determination function, and
the controlling of the handover operation is performed further based on the second information.
